# EUROPÄISCHE PATENTSCHRIFT

(11) **EP 0 617 495 B1**
(45) Veröffentlichungstag und Bekanntmachung des Hinweises auf die Patenterteilung: **09.08.1995**
(21) Anmeldenummer: 93104752.6
(22) Anmeldetag: 23.03.1993
(51) Int. Cl.: H02G 3/18, H04M 1/02, H01R 13/74

(54) **Unterputzgerät für Kommunikationstechnik**
Flush-mounted apparatus for communications technology
Appareil encastrable pour technique de communication

(43) Veröffentlichungstag der Anmeldung: 28.09.1994
(73) Patentinhaber: PAUL HOCHKÖPPER GmbH & Co. KG, D-58511 Lüdenscheid (DE); MOLEX SERVICES GmbH UNTERNEHMENSVERWALTUNG UND -KOORDINATION, D-81673 München (DE)
(72) Erfinder: Hajdukovic, Dragan Tomislav, W-5880 Lüdenscheid (DE); Haugk, Andreas, W-5885 Schalksmühle (DE); Herzog, Harald, W-5800 Hagen (DE); Hermann, Wolfgang, W-8000 München 50 (DE)
(74) Vertreter: Hassler, Werner, Dr.

(56) Entgegenhaltungen:
- DE-A- 3 513 504
- DE-U- 8 520 437
- US-A- 4 894 024

## Beschreibung

Die Erfindung betrifft ein Unterputzgerät für Kommunikationstechnik mit einem Tragring und einem daran gehaltenen Gehäuse zur Aufnahme der Anschlußleitung, der Klemmleisten und der Steckvorrichtungen. Ein Unterputzgerät dieser Art ist aus DE-U-8520437 bekannt.

Derartige Unterputzgeräte müssen sorgfältig elektromagnetisch abgeschirmt werden. Da die Kabel in unterschiedlicher Ausrichtung, senkrecht oder waagrecht, in den Installationswänden verlegt sind, ergeben sich Schwierigkeiten mit der Gestaltung des Unterputzgeräts. Denn es ist erforderlich, die Steckvorrichtung in jeweils gleicher Ausrichtung, unabhängig von der Kabelzuführung auszurichten.

Aufgabe der Erfindung ist die Bereitstellung eines Unterputzgeräts, in das das Kabel in beliebiger Ausrichtung eingeführt werden kann.

Diese Aufgabe wird nach der Erfindung dadurch gelöst, daß die Klemmleisten und die Steckvorrichtungen auf einer Leiterplatte sitzen, die in vier, jeweils um 90° gegeneinander gedrehten Stellungen in das Gehäuse einsetzbar ist.

Die Erfindung unterscheidet sich insofern vom Stand der Technik, als die Leiterplatte in unterschiedlicher Ausrichtung in das Gehäuse eingesetzt werden kann. Das Gehäuse benötigt nur eine Kabeleinführung und eine Zugeentlastungsschelle, so daß eine ökonomische Auswertung des Innenraumes und eine hochwertige elektromagnetische Abschirmung gewährleistet ist.

Eine besonders günstige Montage erreicht man dadurch, daß das Gehäuse eine Kammer mit einer Kabeleinführung und einer etwa quadratischen Auflagefläche für die Leiterplatte aufweist.

Eine genaue Zentrierung wird dadurch erreicht, daß die Auflagefläche durch vier Konsolen mit Ausrichtdomen festgelegt ist.

Die Ausrichtelemente sind besonders im Eckenbereich derart vorgesehen, daß die Leiterplatte entsprechend den Konsolen gestaltete Eckausschnitte und zu den Ausrichtdomen passende Ausnehmungen aufweist.

Eine wirtschaftliche Raumausnutzung wird dadurch erzielt, daß die Flächen der Konsolen und die Eckaussschnitte ein viertelskreisförmige Kontur haben.

Einen festen Zusammenhalt erhält man dadurch, daß die Leiterplatte auf einer Hülse der Kammer aufsitzt und darin verschraubt ist.

Eine Abschirmung auf der Montageseite wird dadurch erzielt, daß auf dem Tragring eine Abschirmplatte aufsitzt.

Die Abschirmplatte läßt sich dadurch genau fixieren, daß Durchgänge der Abschirmplatte auf Ausrichtnoppen des Tragringes zentriert sind.

Ein Ausführungsbeispiel der Erfindung wird unter Bezugnahme auf die Zeichnung erläutert, in der darstellen:
- Fig. 1: eine Draufsicht auf das Unterputzgrät,
- Fig. 2: einen Schnitt nach der Linie II-II in Explosionsdarstellung,
- Fig. 3: eine Draufsicht auf die Leiterplatte mit Anschlußklemmen und Steckvorrichtungen,
- Fig. 4: eine Ansicht der Abschirmplatte,
- Fig. 5: eine Draufsicht entsprechend der Fig. 1 mit geschwenkter Kabeleinführung und
- Fig. 6: eine Ansicht des vollständigen Unterputzgeräts.

Das Unterputzgerät umfaßt ein Gehäuse 1, eine Leiterplatte 2 mit Klemmleisten 3 und Steckvorrichtungen 4, eine Abschirmplatte 5 und eine nichtdargestellte Abdeckung.

Das Gehäuse 1 weist eine an einem rechteckförmigen Tragring 6 sitzende Kammer 7 mit geschlossenen Wänden auf. Um eine elektromagnetische Abschirmung zu erreichen, besteht das Gehäuse 1 aus Metall oder metallisiertem Kunststoff. In einer Wand befindet sich eine Kabeleinführung 8, auf die eine Zugentlastungsschelle 9 ausgerichtet ist. In den vier Ecken der Kammer sind nach innen einspringende Konsolen 10 mit Ausrichtdomen 11 vorgesehen. Die Flächen der Konsolen 10 bilden Ringsegmente und sind in einer Ebene ausgerichtet. Die durch die Ringsegmente festgelegte Aufnahmefläche innerhalb der Kammer 7 stellt sich als Quadrat mit viertelskreisförmigen Eckausschnitten dar. Zentral ist eine Hülse 12 angeordnet. Auf dem Tragring 6 sind Ausrichtnoppen 13 angeordnet. Das Gehäuse 1 wird in üblicher Weise in einer Unterputzdose befestigt, was nicht dargestellt ist.

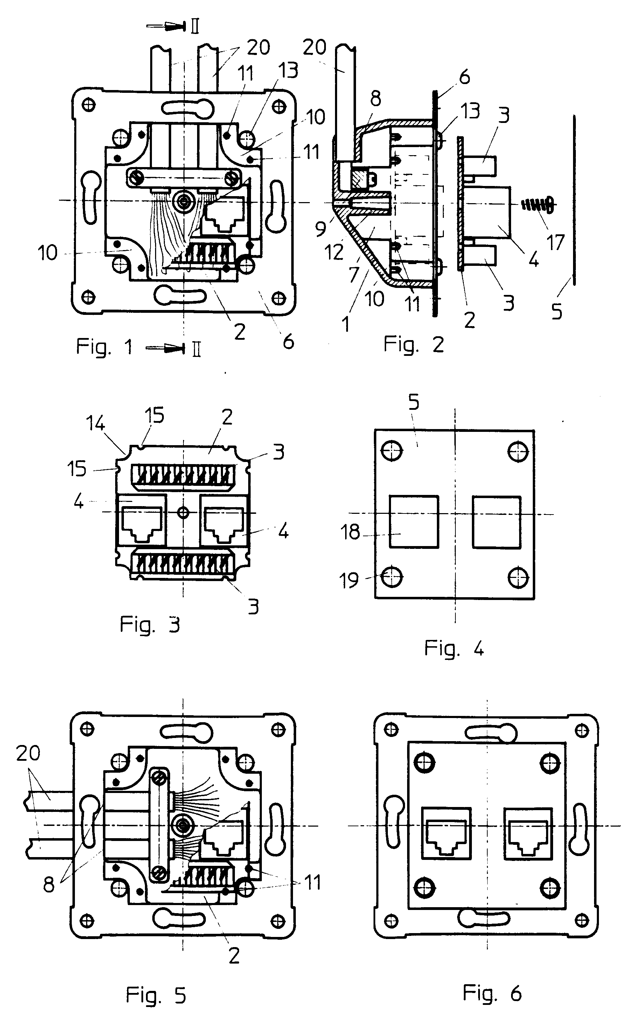

Die Leiterplatte 2 hat einen quadratischen Umriß mit viertelskreisförmigen Eckausschnitten 14. Im Anschluß an die Eckausschnitte 14 sind in den Außenkanten kerbenartige Ausnehmungen 15 angeordnet. Durch diese Ausbildung kann die Leiterplatte 2 auf die viertelskreisförmigen Flächen der Konsolen 10 aufgelegt werden, wobei die Ausnehmungen 15 die Ausrichtdome 11 umschließen, so daß dadurch eine Ausrichtung und Zentrierung der Leiterplatte 2 gesichert ist, vergleiche Fig. 1 und 5, jeweils in der rechten unteren Ecke. Die Leiterplatte 2 kann infolge der quadratischen Konturierung in vier, jeweils um 90° gegeneinander verdrehten Stellungen in die Aufnahmefläche der Kammer 7 eingesetzt werden. An den Rändern der Leiterplatte 2 bleiben jeweils zu den Wandungen der Kammer 7 Schlitze frei, durch die die Leiter aus dem Innenraum der Kammer 7 zu den Klemmleisten 3 herausgeführt werden können.

Auf der Leiterplatte 2 sind zwei Steckvorrichtungen 4 und zwei Klemmleisten 3 angeordnet. Die erforderlichen elektrischen Verbindungen sind als Leiterbahnen ausgebildet. Erforderliche Schaltelemente sind gegebenenfalls zusätzlich auf der Leiterplatte 2 befestigt. Die Leiterplatte 2 weist außerdem ein zentrales Durchgangsloch 16 auf, das auf die Hülse 12 ausgerichtet ist, so daß die Leiterplatte durch eine Schraube 17 festgehalten werden kann.

Die Abschirmplatte 5 weist Ausschnitte 18 für die Steckvorrichtungen 4 und Durchgänge 19 auf, die auf die Ausrichtnoppen 13 passen. Dadurch wird die Abschirmplatte 5 auf dem Tragring 6 ausgerichtet und zentriert. Eine nichtdargestellte Abdeckung schließt das Unterputzgerät ab.

Die Fig. 1 und 2 zeigen eine Ausrichtung der Kabeleinführung 8 für eine Einführung der Kabel von oben. Die Leiterplatte 2 wird in der dargestellten Ausrichtung in die Kammer 7 eingesetzt, damit die Steckvorrichtungen horizontal nebeneinander angeordnet sind. Die Einzelleiter der Kabel 20 werden in der schematisch angedeuteten Weise durch die Schlitze zwischen Leiterplatte 2 und Kemmer 7 nach oben gezogen und in die Klemmleisten 3 eingeführt. Der Zusammenbau und die Funktion des Unterputzgeräts ergibt sich im übrigen aus der vorigen beschreibung des Aufbaus. In Fig. 2 sind die Einzelteile des Unterputzgerätes in auseinandergezogenem Zustand dargestellt. Die Leiterplatte 2 ist zusätzlich in gestrichelten Linien im Einbauzustand dargestellt. Fig. 6 zeigt den Zustand nach Aufsetzen der Abschirmplatte 5.

Wenn die Kabel 20 nach Fig. 5 in horizontaler Richtung, also um 90° versetzt gegenüber der Anordnung der Fig. 1 ausgerichtet sind, wird das Gehäuse 1 in einer um 90° gedrehten Lage eingesetzt, so daß die Kabeleinführung 8 auf die Kabel 20 ausgerichtet ist. Die Leiterplatte 2 läßt sich infolge der beschriebenen Konfiguration in horizontale Ausrichtung in die Kammer 7 einsetzen. Damit ist das Unterputzgerät für eine Kabeleinführung in vier verschiedenen Ausrichtungen geeignet.

## Patentansprüche

1. Unterputzgerät für Kommunikationstechnik mit einem Tragring (6) und einem daran gehaltenen Gehäuse (1) zur Aufnahme der Anschlußleitung (20), der Klemmleisten (3) und der Steckvorrichtungen (4), dadurch gekennzeichnet, daß die Klemmleisten (3) und die Steckvorrichtungen (4) auf einer Leiterplatte (2) sitzen, die in vier, jeweils um 90° gegeneinander gedrehten Stellungen in das Gehäuse (1) einsetzbar ist.

2. Unterputzgerät nach Anspruch 1, dadurch gekennzeichnet, daß das Gehäuse (1) eine Kammer (7) mit einer Kabeleinführung (8) und einer etwa quadratischen Auflagefläche für die Leiterplatte (2) aufweist.

3. Unterputzgerät nach Anspruch 2, dadurch gekennzeichnet, daß die Auflagefläche durch vier Konsolen (10) mit Ausrichtdomen (11) festgelegt ist.

4. Unterputzgerät nach Anspruch 2 oder 3, dadurch gekennzeichnet, daß die Leiterplatte (2) entsprechend den Konsolen (10) gestaltete Eckausschnitte (14) und zu den Ausrichtdomen (11) passende Ausnehmungen (15) aufweist.

5. Unterputzgerät nach Anspruch 4, dadurch gekennzeichnet, daß die Flächen der Konsolen (10) und die Eckaussschnitte (14) eine viertelskreisförmige Kontur haben.

6. Unterputzgerät nach einem der Ansprüche 1 bis 5, dadurch geekennzeichnet, daß die Leiterplatte (2) auf einer Hülse (12) der Kammer (7) aufsitzt und damit verschraubt ist.

7. Unterputzgerät nach einem der Ansprüche 1 bis 6, dadurch gekennzeichnet, daß auf dem Tragring (6) eine Abschirmplatte (5) aufsitzt.

8. Unterputzgerät nach Anspruch 7, dadurch gekennzeichnet, daß Durchgänge (19) der Abschirmplatte (5) auf Ausrichtnoppen (13) des Tragringes (6) zentriert sind.

## Claims

1. A flush-mounted device for communications technology, having a supporting ring (6) and, held thereon, a housing (1) for receiving the terminal lead (20), the connecting strips (3) and the plug-in apparatus (4), characterized in that the connecting strips (3) and the plug-in apparatus (4) are seated on a printed circuit board (2) which can be inserted into the housing (1) in four positions, each turned through 90° with respect to one another.

2. A flush-mounted device according to Claim 1, characterized in that the housing (1) has a chamber (7) with a cable entry (8) and an approximately square bearing surface for the printed circuit board (2).

3. A flush-mounted device according to Claim 2, characterized in that the bearing surface is defined by four ledges (10) having aligning domes (11).

4. A flush-mounted device according to Claim 2 or 3, characterized in that the printed circuit board (2) has corner cutouts (14) shaped to correspond to the ledges (10) and recesses (15) fitting the aligning domes (11).

5. A flush-mounted device according to Claim 4, characterized in that the surfaces of the ledges (10) and the corner cutouts (14) have a contour in the shape of a quarter circle.

6. A flush-mounted device according to one of Claims 1 to 5, characterized in that the printed circuit board (2) is seated on a sleeve formation (12) of the chamber (7) and is screwed thereto.

7. A flush-mounted device according to one of Claims 1 to 6, characterized in that a screening plate (5) is seated on the supporting ring (6).

8. A flush-mounted device according to Claim 7, characterized in that passages (19) in the screening plate (5) are centred on aligning knobs (13) of the supporting ring (6).

## Revendications

1. Appareil encastrable pour une technique de communication, comportant un anneau porteur (6) et un boîtier (1), qui y est maintenu, pour le logement du câble de raccordement (20), des bornes (3) et des dispositifs d'enfichage (4), caractérisé en ce que les bornes (3) et les dispositifs d'enfichage (4) sont situés sur une plaquette de circuit imprimé (2) qui peut être insérée dans le boîtier (1) dans quatre positions tournées chaque fois de 90° l'une par rapport à l'autre.

2. Appareil encastrable suivant la revendication 1, caractérisé en ce que le boîtier 1 présente une chambre (7) avec une entrée de câble (8) et une surface d'appui approximativement carrée pour la plaquette de circuit imprimé (2).

3. Appareil encastrable suivant la revendication 2, caractérisé en ce que la surface d'appui est déterminée par quatre consoles (10) comportant des bosses d'alignement (11).

4. Appareil encastrable suivant la revendication 2 ou 3, caractérisé en ce que la plaquette de circuit imprimé (2) présente des encoches de coin (14) façonnées conformément aux consoles (10) et des évidements (15) adaptés aux bosses d'alignement (11).

5. Appareil encastrable suivant la revendication 4, caractérisé en ce que les surfaces des consoles (10) et les encoches de coin (14) ont un contour en forme de quart de cercle.

6. Appareil encastrable suivant l'une des revendications 1 à 5, caractérisé en ce que la plaquette de circuit imprimé (2) est appliquée sur un manchon (12) de la chambre (7) et est vissée à celui-ci.

7. Appareil encastrable suivant l'une des revendications 1 à 6, caractérisé en ce qu'une plaque de protection (5) est appliquée sur l'anneau porteur (6).

8. Appareil encastrable suivant la revendication 7, caractérisé en ce que des passages (19) de la plaque de protection (5) sont centrés sur des excroissances d'alignement (13) de l'anneau porteur (6).
